# EUROPEAN PATENT SPECIFICATION

(11) **EP 2 687 308 B1**
(45) Date of publication and mention of the grant of the patent: **07.04.2021**
(21) Application number: 13177137.0
(22) Date of filing: 18.07.2013
(51) Int. Cl.: B23B 3/06, B23Q 1/01

(54) **Lathe for machining curved surfaces**
Drehmaschine zum Bearbeiten gekrümmter Oberflächen
Tour pour l'usinage de surfaces incurvées

(30) Priority: 20.07.2012 CN 201210252845; 20.07.2012 CN 201210252849
(43) Date of publication of application: 22.01.2014
(73) Proprietor: Fuxiang Precision Industrial (Kunshan) Co., Ltd., Yushan Town, Kunshan City Jiangsu (CN)
(72) Inventor: Yang, Ming-Lu, New Taipei (TW); Zhang, Tiang-En, JIASHAN (CN); Zhang, Ya-Dong, JIASHAN (CN); Jia, Jian-Shi, JIASHAN (CN); Peng, Yang-Mao, JIASHAN (CN); Zhang, Wei-Chuan, JIASHAN (CN); Sui, Jing-Shuang, JIASHAN (CN); Qu, Jian, JIASHAN (CN); Chen, Feng-Hua, JIASHAN (CN); Jia, Jian-Hua, JIASHAN (CN); Qin, Xue, JIASHAN (CN); Tian, Zhen-Zhou, JIASHAN (CN); Li, Bao-Peng, JIASHAN (CN); Yu, Jian-Min, JIASHAN (CN)
(74) Representative: CMS Cameron McKenna Nabarro Olswang LLP

(56) References cited:
- EP-A1- 1 054 501
- CN-U- 201 524 905
- DE-A1- 19 650 360
- DE-A1- 19 749 668
- DE-A1-102009 058 649
- FR-A1- 2 820 070
- JP-A- 2004 066 430
- US-A1- 2002 002 420
- US-A1- 2006 270 540

## Description

### BackGround

### Field

The present disclosure generally relates to lathes, and particularly, to a lathe which can machine a curved surface.

### BackGround

In the related manufacturing field, a milling cutter with different cutting edges is used for machining curved surfaces. Some tracks are formed on the milled surface of the workpiece because of intermitted contact and interrupted milling by the milling cutter. A polish step needs to be added for a better appearance. When a lathe is used for machining curved surfaces, only a two dimensional curved surface with rotary feature can be machined because the movement of a cutter of the lathe is limited US Patent Application Publication No. 2006/270540A1 discloses a machine tool. The machine tool comprises a bed, a first saddle that is disposed to the bed and moves freely in a horizontal plane in the front-rear direction (along the Y-axis), a second saddle that is disposed to the first saddle and moves freely in a horizontal plane side to side (along the X-axis), a spindle head that is disposed to the second saddle and moves freely vertically (along the Z-axis), a main spindle that holds a tool T and is supported by the spindle head to rotate freely on the main spindle axis, and a table on which a pallet P is mounted. Work W is fixed on top of the pallet P. The machine tool unit also comprises a Y-axis guide mechanism for guiding movement of the first saddle along the Y-axis.

Therefore, there is room for improvement within the art.

### Summary

According to the invention a lathe includes a machine support, a working table positioned on the machine support, a rotating driver, a moving device, and a feeding device. The rotating driver rotates the work table. The moving device includes at least one cross beam, at least one first driving mechanism, and at least one second driving mechanism. The cross beam is movably positioned on the machine support above the working table. The feeding device is movably positioned on the at least one cross beam, and includes a feeding driving mechanism and a cutter. The first driving mechanism drives the cross beam to move along a first direction, and the second driving mechanism drives the feeding device to move along a second direction at about ninety degrees from the first direction. The feeding mechanism drives the cutter to move backwards and forwards along a third direction perpendicular to the first and second direction.

### BRIEF DESCRIPTION OF THE DRAWING

The components in the drawings are not necessarily drawn to scale, the emphasis instead placed upon clearly illustrating the principles of the present disclosure. Moreover, in the drawings, like reference numerals designate corresponding parts throughout the several views.
FIG. 1 is an isometric view of an embodiment of a lathe having a feeding device and a work table.
FIG. 2 is a partial, isometric view of the lathe of FIG. 1.
FIG. 3 shows an exploded and isometric view of the lathe of FIG. 2
FIG. 4 shows an isometric view of the feeding device and the work table of the lathe of FIG. 1.
FIG. 5 is an exploded, isometric view of the feeding device of FIG. 1.

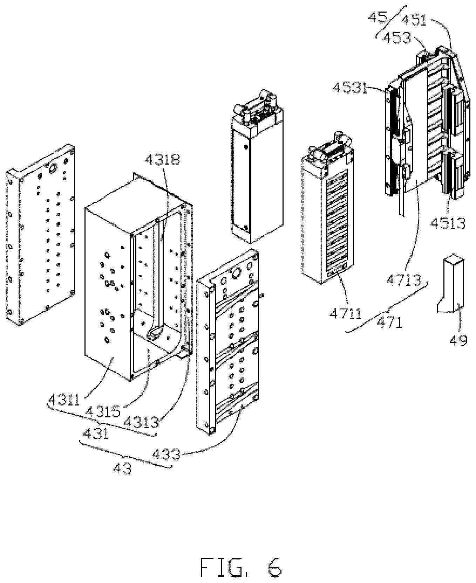

FIG. 6 is similar to FIG. 5, but viewed from another aspect.

### DETAILED DESCRIPTION

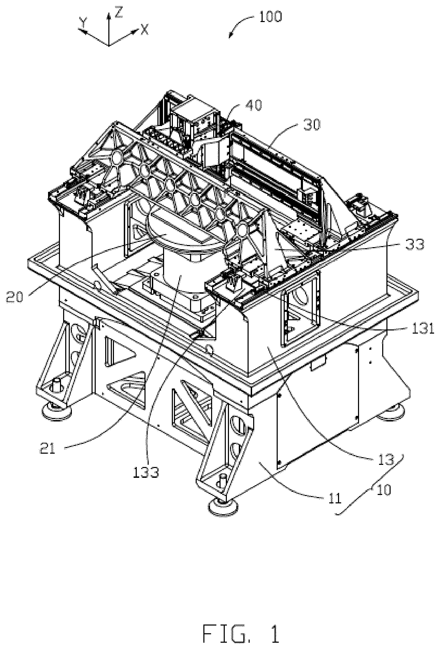

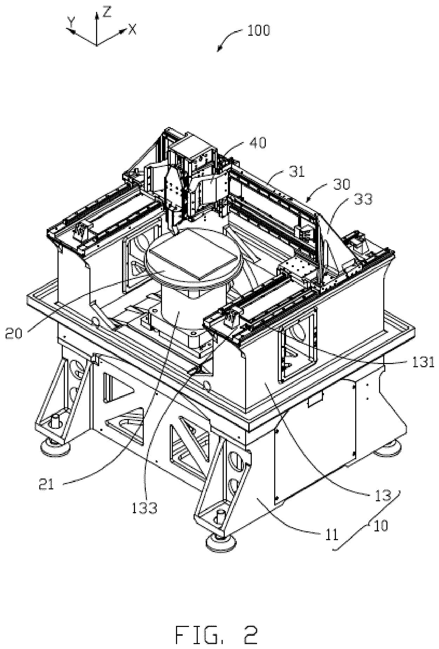

FIGS. 1 and 2 show an embodiment of a lathe 100. The lathe 100 includes a machine support 10, a work table 20, a moving device 30, a feeding device 40, and a controller (not shown). The work table 20 holds a workpiece in place and is supported by the machine support 10. The moving device 30 is movably positioned on the machine support 10 above the work table 20. The feeding device 40 is slidably mounted on the moving device 30. The controller is electrically connected with the work table 20, the moving device 30, and the feeding device 40 for controlling the lathe 100. Under the control of the controller, the moving device 30 can be driven to move with the feeding device 40, such that the feeding device 40 can be driven to move along the X, the Y, and the Z axes.

The machine support 10 includes a base 11 and a pair of support bodies 13 positioned substantially parallel on the base 11. A pair of first sliding rails 131 are positioned substantially parallel on a surface of each support body 13 away from the base 11, and arranged apart from each other. In the illustrated embodiment, the first sliding rails 131 extend substantially parallel to the X-axis (a first direction). A receiving groove 133 is formed on each support body 13 between the two first sliding rails 131.

Referring also to FIG. 2, the work table 20 is substantially cylindrical, and rotatably positioned on the base 11 between the two support bodies 13 via the rotating driver 21. The rotating driver 21 drives the work table 20 and a workpiece placed on the work table 20 to rotate. In the illustrated embodiment, the rotating driver 21 is a direct drive motor.

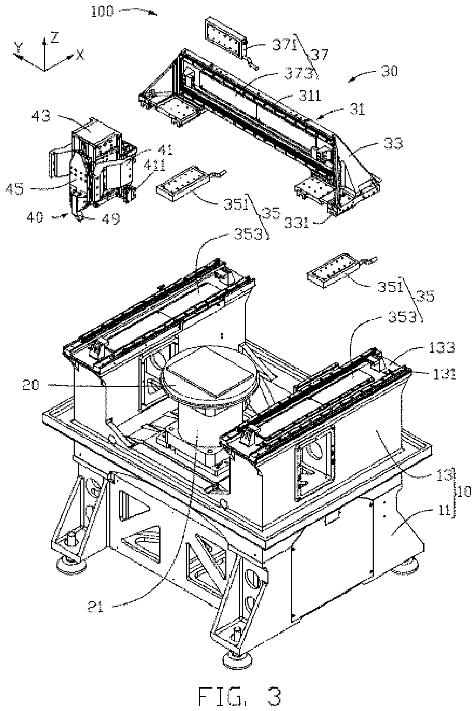

Referring also to FIG. 3, the moving device 30 is slidably mounted on the pair of support bodies 13 above the work table 20. The moving device 30 includes two cross beams 31, four sliding bases 33, four first driving mechanisms 35, and two second driving mechanisms 37. The two cross beams 31 are positioned spaced apart on the support bodies 13 for high stability. Opposite ends of each cross beam 31 are slidably positioned on the support bodies 13 via a pair of sliding bases 33, respectively. The extending direction of the cross beam 31 is substantially parallel to the Y-axis (a second direction). A pair of second sliding rails 311 is positioned on a side surface of each cross beam 31 and extending substantially parallel to the Y-axis. Two side surfaces having the second sliding rails 311 of the cross beams 31 are positioned face to face. Two sliding bases 33 are installed on the opposite ends of the corresponding cross beam 31 to slidably connect with the first sliding rails 131. The sliding base 33 includes a first sliding block 331 slidably engaging with the first sliding rails 131. Each first driving mechanism 35 is mounted on a surface of one sliding base 33 away from the cross beam 31 and received in one receiving groove 133.

The first driving mechanisms 35 are configured to drive the cross beams 31 to move along the first sliding rails 131. Each of the first driving mechanisms 35 includes a first forcer 351 and a first stator 353. The first forcer 351 is fixedly mounted on the sliding base 31 facing the receiving groove 133. Two first stators 353 are fixedly received in each of the receiving grooves 133. One second driving mechanism 37 is mounted on each of the cross beams 31 between two second sliding rails 311 to drive the feeding device 40 to move along the second sliding rails 311. Each of the second driving mechanisms 37 includes a second forcer 371 and a second stator 373. Each of the second forcers 371 are fixedly mounted on each of the opposite surfaces of the feeding device 40 facing the cross beams 31. Both of the second stators 373 are installed on each of the cross beams 31 between two second sliding rails 311. The first driving mechanisms 35 and the second driving mechanism 37 are electrically connected to the controller. In the illustrated embodiment, the first driving mechanisms 35 and the second driving mechanism 37 are linear motors. In other embodiments, the first driving mechanisms 35 and the second driving mechanism 37 are other drivers, such as hydraulic cylinders or rams. The number of the first driving mechanisms 35, the second driving mechanism 37, and the cross beam 31 can be designed according to their applications.

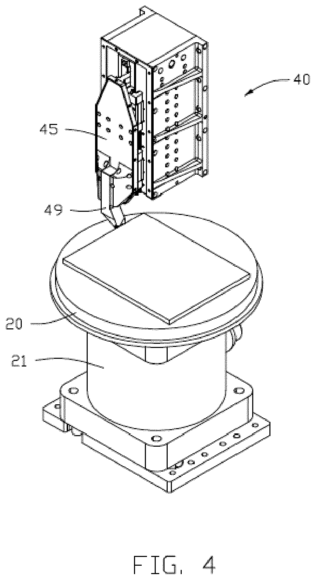

FIGS. 3 to 5 shows that the feeding device 40 is slidably positioned between the two cross beams 31. The feeding device 40 includes a sliding saddle 41, a mounting seat 43, a tool holder 45, a feeding mechanism 47, and a cutter 49. The sliding saddle 41 is movably assembled with the cross beams 31. The mounting seat 43 is slidably connected to the sliding saddle 41 away from the cross beam 31. The feeding mechanisms 47 are mounted and received in the mounting seat 43 to electrically connect with the controller. The tool holder 45 is slidably positioned on the mounting seat 43, and has a reciprocating motion substantially parallel to the Z-axis (the Z-axis direction, a second direction) relative to the mounting seat 43.

The sliding saddle 41 is slidably positioned between the two cross beams 31. Two second sliding blocks 411 are separately positioned on opposite surfaces of the sliding saddle 41 away from the tool holder 45, and substantially parallel to the Y-axis towards the cross beam 31. The second sliding blocks 411 are slidably engaged with the correspondingly second sliding rails 311. Each of the second forcers 371 is positioned between the two second sliding blocks 411.

The mounting seat 43 includes a frame 431 and two mounting boards 433. The frame 431 includes a first side wall 4311 and a second side wall 4313. The first side wall 4311 and the second side wall 4313 are positioned substantially parallel to each other and cooperatively define a receiving space 4315. The fist side wall 4311 is slidably connected with the sliding saddle 41. Two guiding portions 4317 protrude from an inner surface of the first side wall 4311 facing toward the second side wall 4315 and extend substantially parallel to the Z-axis. A through groove 4318 is defined in the second side wall 4313 and extends along a direction substantially parallel to the Z-axis corresponding to the guiding portions 4317. Two guiding portions 4319 protrude from an outer surface of the second side wall 4313 at two sides of the through groove 4318. In the illustrated embodiment, the guiding portions 4319 are sliding rails, the frame 431 is integrally formed. Two mounting boards 433 are respectively installed on two opening sides of the frame 431. Each mounting board 433 is connected substantially perpendicularly to the first wall 4311 and the second side wall 4313 to close the two opening sides of the frame 431.

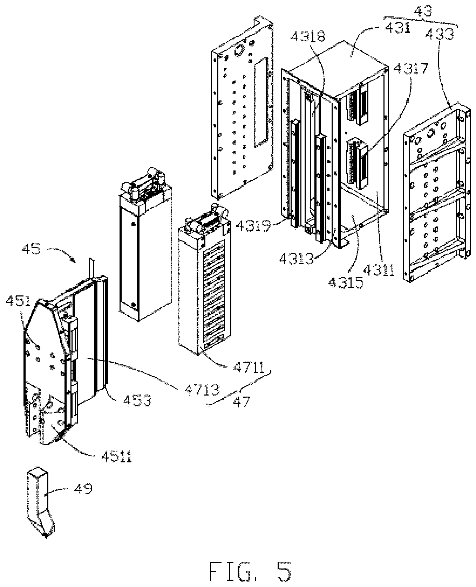

The tool holder 45 slidably connects with the mounting seat 43. The tool holder 45 is substantially "T" shaped, and includes a main body 451 and a sliding board 453 protruding substantially perpendicularly from the main body 451. The main body 451 is a bar of material tapering in at both ends, and positioned outside of the mounting seat 43. Two distanced holding portions 4511 are positioned on a bottom of the main body 451 away from the sliding board 453. Four first direct portions 4513 (see FIG. 5) are positioned on a surface of the main body 451 adjacent to the sliding board 453. The four first direct portions 4513 are divided into two groups, each group having two first direct portions 4513 slidably engaging with one guiding portion 4319. The sliding board 453 is located between the two groups of the first direct portions 4513. The sliding board 453 passes through the through groove 4318 and is slidably attached to the two guiding portions 4317, dividing the receiving space 4315 into two parts. A second direct portion 4531 is formed on an end of the sliding board 453 away from the main body 451, and received in the guiding portion 4317. In the illustrated embodiments, the first direct portions 4513 are sliding blocks, and the second direct portion 4531 is a sliding rail.

The feeding mechanism 47 is mounted in the mounting seat 43, and includes two drivers 471. The two drivers 471 are received in the receiving space 4315 and positioned on two sides of the sliding board 453, respectively. In the illustrated embodiment, the drivers 471 are linear motors. Each driver 471 includes a forcer 4711 and a stator 4713. Each forcer 4711 is fixed to a surface of each of the mounting boards 433. The sliding board 453 is positioned between the two forcers 4711. The forcers 4711 produce alternating magnetic fields when the forcers 4711 are supplied with an alternating electrical current. Two stators 4713 are respectively attached on the opposite surfaces of the sliding board 453. Each stator 4713 is located between a forcer 4711 and the sliding board 453. Interactions between magnetic fields produced by the stators 4713 and the alternating magnetic fields which are produced by the forcers 4711 drive the tool holder 45 in a reciprocating motion at a high speed along the direction of the Z-axis. In other embodiments, the number of drivers 471 can be designed according to application. For example, the two drivers 471 can replace a single driver with more power, or three or more drivers can be positioned to drive the tool holder 45 to maximize the available power, and simplify assembly of the drivers.

The cutter 49 is clamped between the two holding portions 4511 for machining curved surfaces of the workpiece.

In other embodiments, the mounting seat 43 may be attached on the sliding saddle 41 when the lathe 100 machines the workpiece of one type. In other words, the mounting seat 43 does not need to move along the Z-axis direction. A driving mechanism electrically connected with the controller may be positioned in the feeding device 40 to drive the mounting seat 43 to slide along the sliding saddle 41 in the Z-axis. The sliding saddle 41 may be omitted, and the mounting seat 43 can be directly slidably positioned on the cross beam 31.

In other embodiments, the forcers 4711 may be directly installed on the frame 431. The alternating magnetic fields produced by the forcers 4711 drive the stators 4713, thereby causing the tool holder 45 to undergo a reciprocating motion at high speed along the guiding portions 4317.

In assembly, the work table 20 is positioned between the two support bodies 13. The cross beams 31 are installed on the two support bodies 13 via the sliding bases 33. The first driving mechanism 35 and the second mechanism 37 are mounted on the moving device 30 and elastically connected with the controller. The sliding saddle 41 is also positioned on the cross beam 31. The two stators 4713 are fixedly mounted on two surfaces of the sliding board 453. The sliding board 453 passes through the through groove 4318 and slidably connects with the second direct portion 4531. Each forcer 4711 is installed on one mounting board 433 and received in the mounting seat 43 together with the mounting board 433. The cutter 49 is fixedly mounted between the two holding portions 4511. Finally, the feeding device 40 is positioned on the sliding saddle 41 and electrically connected to the controller.

In use, the workpiece is placed on the work table 20. The feeding device 40 moves and arrives at a position above the workpiece. The first driving mechanism 35 drives the moving device 30 to move along the first sliding rails 131 in the X-axis direction, the rotating driver 21 drives the workpiece to rotate, and the cutter 49 is driven to move back and forth at high speed in the Z-axis direction by the drivers 471 for machining the workpiece. The rotating speed of the rotating driver 21, the speed and the range movement of the cutter 49 are programmed according to cutting required for each machining portion of the workpiece. A three dimensional curved surface will be machined because the cutting removal of the workpiece along the rotating direction in the Z-axis is different. The planar machining path of the cutter 49 is substantially spiral. The feeding device 40 and the work table 20 stop moving, and the moving device 30 returns to the initial position after completing the machining. The workpiece can then be unloaded from the work table 20.

The feeding device 40 is capable of moving along X-axis and Y-axis via the moving device 30 and feeding with high speed in Z-axis for machining three dimensional curved surfaces. Compared with the conventional milling cutter machining, no other process needs to be performed on the workpiece used by the lathe 100 because the cutter 49 is continuously machining in three directions at one time. In addition, the work table 20 is directly driven to rotate by the rotating driver 21, such that the work table 20 is capable of adjustments with great torsion.

While the present disclosure has been described with reference to particular embodiments, the description is illustrative of the disclosure and is not to be construed as limiting the disclosure. Therefore, various modifications can be made to the embodiments by those of ordinary skill in the art without departing from the scope of the disclosure, as defined by the appended claims.

## Claims

1. A lathe (100), comprising:
a machine support (10);
a working table (20) positioned on the machine support (10);
a rotating driver (21) positioned on the machine support (10) for driving the working table (20) to rotate; the machine support (10) comprising a base (11), a pair of support bodies (13) positioned substantially parallel on the base (11), a pair of first sliding rails (131) positioned substantially parallel on a surface of each support body (13);
a moving device (30) comprising two cross beams (31) spaced apart from each other, four sliding bases (33), four first driving mechanisms (35), and at least one second driving mechanism (37), wherein each cross beam (31) is slidably positioned on the machine support (10) above the working table (20) via a pair of sliding bases (33); each first driving mechanism (35) comprises a first forcer (351) and a first stator (353) and is configured to drive the cross beams (31) to move along the first rails (131) in a first direction; and
a feeding device (40) movably positioned on the cross beams (31), the feeding device (40) comprising a feeding driving mechanism (47) and a cutter (49), the at least one second driving mechanism (37) is configured for driving the feeding device (40) to move along the cross beams (31) in a second direction at ninety degrees from the first direction, and the feeding mechanism (47) is configured for driving the cutter (49) to move backwards and forwards under precise control at high speed along a third direction, for machining a workpiece supported on the working table (20) to form a three dimensional curved surface on the workspace, the third direction is substantially perpendicular to the first and second direction.

2. The lathe (100) of claim 1, wherein each of the sliding bases (33) comprises two first sliding blocks (331) to slidably engage with the pair of first sliding rails (131).

3. The lathe (100) of claim 1, wherein the at least one first forcer (351) is fixedly mounted on each of the at least two sliding bases (33) facing the pair of the support bodies (13), the least one first stator (353) is fixedly mounted on each of the two support bodies (13), and the interactions between the at least one first forcer (351) and the at least one first stator (353) drive the moving device (30) to move on the pair of support bodies (13).

4. The lathe (100) of claim 3, wherein each of the pair of support body (13) forms a receiving groove (133) between the pair of (131), the at least one first stator (353) is fixedly received in the receiving groove (133), and the at least one first forcer (353) is slidably received in the receiving groove (133).

5. The lathe (100) of claim 1, wherein the second driving mechanism (37) comprises at least one second forcer (371) and at least one second stator (373), the at least one second forcer (371) is fixedly mounted on the feeding device (40), the at least one second stator (373) is fixedly mounted on the cross beams (31), and the interactions between the at least one second forcer (371) and the at least one second stator (373) drive the cutter (49) to move along the cross beams (31).

6. The lathe (100) of claim 1, wherein the feeding device (40) further comprises a sliding saddle (41) slidably assembled with the cross beams (31), the cross beams (31) have a pair of second sliding rails (311) positioned on a side surface facing the feeding device (40), each of the surfaces of the sliding saddle (41) facing the cross beam (31) has two second sliding blocks (411) slidably engaged with the pair of second sliding rails (311), and the at least one second stator (373) is positioned between the two second sliding blocks (411).

7. The lathe (100) of claim 1, wherein the feeding device (40) further comprises a mounting seat (43) and a tool holder(45), the mounting seat (43) is positioned on the moving device (30), the tool holder (45) is slidably engaged with the mounting seat (43), the cutter (49) is installed on the tool holder (45), and the feeding mechanism (47) is mounted and received in the mounting seat (43) for controlling the tool holder (45) moving along the third direction relative to the mounting seat (43).

8. The lathe (100) of claim 7, wherein the tool holder (45) comprises a main body (451) and a sliding board (453) protruding from the main body (451), the mounting seat (43) comprises a frame (431), at least one guiding portion (4317) is positioned in the frame (431), the main body (451) slidably is positioned out of the mountings seat (43), and the sliding board (453) passes through the through groove (4318) and slidably engages with the at least one guiding portion (4317).

9. The lathe (100) of claim 8, wherein the frame (431) comprises a first side wall (4311) and a second side wall (4313) positioned substantially parallel to the first side wall (4311), the at least one guiding portion (4317) is positioned on the first side wall (4311) and extends substantially parallel to the third direction, a through groove (4318) is defined at the second side wall (4313) corresponding to the at least one guiding portion (4317), two guiding portions (4319) are positioned on the second side wall (4313) and at two sides of the through groove (4318), the main body (451) slidably connects with the two guiding portions (4319), and the sliding board (453) passes through the through groove (4318).

10. The lathe (100) of claim 9, wherein the main body (451) comprises two groups of first direct portions (4513) engaged with the guiding portions (4317), and a second direct portion (4531) is positioned at an end of the sliding board (453) away from the main body (451) to slidably connect with the at least one guiding portion (4317).

## Patentansprüche

1. Drehmaschine (100), die Folgendes umfasst:
eine Maschinenstütze (10);
einen Arbeitstisch (20), der auf der Maschinenstütze (10) angeordnet ist;
einen Rotationstreiber (21), der auf der Maschinenstütze (10) zum Antreiben des Arbeitstischs (20), zu rotieren, angeordnet ist; wobei die Maschinenstütze (10) Folgendes umfasst: eine Basis (11), ein Paar von Stützkörpern (13), die auf der Basis (11) im Wesentlichen parallel angeordnet sind, ein Paar von ersten Gleitschienen (131), die auf einer Oberfläche jedes Stützkörpers (13) im Wesentlichen parallel angeordnet sind;
eine Bewegungsvorrichtung (30), die Folgendes umfasst: zwei Querbalken (31), die voneinander beabstandet sind, vier Gleitbasen (33), vier erste Antriebsmechanismen (35) und wenigstens einen zweiten Antriebsmechanismus (37), wobei jeder Querbalken (31) auf der Maschinenstütze (10) über dem Arbeitstisch (20) über ein Paar von Gleitbasen (33) gleitbar angeordnet ist; wobei jeder erste Antriebsmechanismus (35) einen ersten Kolben (351) und einen ersten Stator (353) umfasst und konfiguriert ist, um die Querbalken (31) anzutreiben, sich entlang der ersten Schienen (131) in eine erste Richtung zu bewegen; und
eine Vorschubvorrichtung (40), die auf den Querbalken (31) bewegbar angeordnet ist, wobei die Vorschubvorrichtung (40) einen Vorschubantriebsmechanismus (47) und einen Schneider (49) umfasst, wobei der wenigstens eine zweite Antriebsmechanismus (37) zu Folgendem konfiguriert ist: Antreiben der Vorschubvorrichtung (40), sich entlang der Querbalken (31) in eine zweite Richtung bei neunzig Grad von der ersten Richtung zu bewegen, und der Vorschubmechanismus (47) zu Folgendem konfiguriert ist: Antreiben des Schneiders (49), sich vorwärts und rückwärts unter präziser Steuerung bei hoher Geschwindigkeit entlang einer dritten Richtung zum Spanen eines Werkstücks zu bewegen, das auf dem Arbeitstisch (20) gestützt wird, um eine dreidimensional gekrümmte Oberfläche auf dem Arbeitsbereich auszubilden, wobei die dritte Richtung zu der ersten und der zweiten Richtung im Wesentlichen senkrecht verläuft.

2. Drehmaschine (100) nach Anspruch 1, wobei jede der Gleitbasen (33) zwei erste Gleitblöcke (331) umfasst, um mit dem Paar von ersten Gleitschienen (131) gleitbar in Eingriff zu stehen.

3. Drehmaschine (100) nach Anspruch 1, wobei der wenigstens eine erste Kolben (351) auf jeder der wenigstens zwei Gleitbasen (33) fest montiert ist, die dem Paar der Stützkörper (13) zugewandt sind, wobei der wenigstens eine erste Stator (353) auf jedem der beiden Stützkörper (13) fest montiert ist, und die Wechselwirkungen zwischen dem wenigstens einen ersten Kolben (351) und dem wenigstens einen ersten Stator (353) die Bewegungsvorrichtung (30) antreiben, sich auf dem Paar von Stützkörpern (13) zu bewegen.

4. Drehmaschine (100) nach Anspruch 3, wobei jeder des Paars von Stützkörpern (13) eine Aufnahmerille (133) zwischen dem Paar von ersten Gleitschienen (131) ausbildet, wobei der wenigstens eine erste Stator (353) in der Aufnahmerille (133) fest aufgenommen ist und der wenigstens eine erste Kolben (353) in der Aufnahmerille (133) gleitbar aufgenommen ist.

5. Drehmaschine (100) nach Anspruch 1, wobei der zweite Antriebsmechanismus (37) wenigstens einen zweiten Kolben (371) und wenigstens einen zweiten Stator (373) umfasst, wobei der wenigstens eine zweite Kolben (371) auf der Vorschubvorrichtung (40) fest montiert ist, der wenigstens eine zweite Stator (373) auf den Querbalken (31) fest montiert ist und die Wechselwirkungen zwischen dem wenigstens einen zweiten Kolben (371) und dem wenigstens einen zweiten Stator (373) den Schneider (49) antreiben, sich entlang der Querbalken (31) zu bewegen.

6. Drehmaschine (100) nach Anspruch 1, wobei die Vorschubvorrichtung (40) ferner einen Gleitsattel (41) umfasst, der mit den Querbalken (31) gleitbar zusammengesetzt ist, wobei die Querbalken (31) ein Paar von zweiten Gleitschienen (311) aufweisen, die auf einer Seitenoberfläche angeordnet sind, die der Vorschubvorrichtung (40) zugewandt ist, wobei jede der Oberflächen des Gleitsattels (41), die dem Querbalken zugewandt ist, zwei zweite Gleitblöcke (411) aufweist, die mit dem Paar von zweiten Gleitschienen (311) gleitbar in Eingriff stehen, und wobei der wenigstens eine zweite Stator (373) zwischen den zwei zweiten Gleitblöcken (411) angeordnet ist.

7. Drehmaschine (100) nach Anspruch 1, wobei die Vorschubvorrichtung (40) ferner einen Montagesitz (43) und einen Werkzeughalter (45) umfasst, wobei der Montagesitz (43) auf der Bewegungsvorrichtung (30) angeordnet ist, der Werkzeughalter (45) mit dem Montagesitz (43) gleitbar in Eingriff steht, der Schneider (49) auf dem Werkzeughalter (45) installiert ist und der Vorschubmechanismus (47) in dem Montagesitz (43) zum Steuern des Werkzeughalters (45) montiert und aufgenommen ist, der sich entlang der dritten Richtung relativ zu dem Montagesitz (43) bewegt.

8. Drehmaschine (100) nach Anspruch 7, wobei der Werkzeughalter (45) einen Hauptkörper (451) und eine Gleitplatte (453) umfasst, die von dem Hauptkörper (451) hervorsteht, wobei der Montagesitz (43) einen Rahmen (431) umfasst, wenigstens ein Führungsabschnitt (4317) in dem Rahmen (431) angeordnet ist, der Hauptkörper (451) aus dem Montagesitz (43) heraus gleitbar angeordnet ist und die Gleitplatte (453) die Durchgangsrille (4318) durchläuft und mit dem wenigstens einen Führungsabschnitt (4317) gleitbar in Eingriff steht.

9. Drehmaschine (100) nach Anspruch 8, wobei der Rahmen (431) eine erste Seitenwand (4311) und eine zweite Seitenwand (4313) umfasst, die zu der ersten Seitenwand (4311) im Wesentlichen parallel angeordnet ist, wobei der wenigstens eine Führungsabschnitt (4317) an der ersten Seitenwand (4311) angeordnet ist und sich zu der dritten Richtung im Wesentlichen parallel erstreckt, eine Durchgangsrille (4318) an der zweiten Seitenwand (4313) definiert ist, die dem wenigstens einen Führungsabschnitt (4317) entspricht, zwei Führungsabschnitte (4319) an der zweiten Seitenwand (4313) und an zwei Seiten der Durchgangsrille (4318) angeordnet sind, der Hauptkörper (451) sich mit den beiden Führungsabschnitten (4319) gleitbar verbindet und die Gleitplatte (453) die Durchgangsrille (4318) durchläuft.

10. Drehmaschine (100) nach Anspruch 9, wobei der Hauptkörper (451) zwei Gruppen von ersten direkten Abschnitten (4513) umfasst, die mit den Führungsabschnitten (4317) in Eingriff stehen, und ein zweiter direkter Abschnitt (4531) an einem Ende der Gleitplatte (453) fernab von dem Hauptkörper (451) angeordnet ist, um sich mit dem wenigstens einen Führungsabschnitt (4317) gleitbar zu verbinden.

## Revendications

1. Tour (100), comprenant :
un support de machine (10) ;
une table de travail (20) positionnée sur le support de machine (10) ;
un dispositif d'entraînement rotatif (21) positionné sur le support de machine (10) pour entraîner la table de travail (20) en rotation ;
le support de machine (10) comprenant une base (11), une paire de corps de support (13) positionnés sensiblement parallèlement sur la base (11), une paire de premiers rails coulissants (131) positionnés sensiblement parallèlement sur une surface de chaque corps de support (13) ;
un dispositif mobile (30) comprenant deux traverses (31) espacées l'une de l'autre, quatre bases coulissantes (33), quatre premiers mécanismes d'entraînement (35) et au moins un second mécanisme d'entraînement (37), dans lequel chaque traverse (31) est positionnée de manière coulissante sur le support de machine (10) au-dessus de la table de travail (20) par le biais d'une paire de bases coulissantes (33) ;
chaque premier mécanisme d'entraînement (35) comprend un premier forceur (351) et un premier stator (353), et est conçu pour entraîner les traverses (31) à se déplacer le long des premiers rails (131) dans une première direction ; et
un dispositif d'alimentation (40) positionné de manière mobile sur les traverses (31), le dispositif d'alimentation (40) comprenant un mécanisme d'entraînement d'alimentation (47) et un couteau (49), l'au moins un second mécanisme d'entraînement (37) est conçu pour entraîner le dispositif d'alimentation (40) à se déplacer le long des traverses (31) dans une deuxième direction à quatre-vingt-dix degrés de la première direction, et le mécanisme d'alimentation (47) est conçu pour entraîner le couteau (49) à se déplacer vers l'arrière et vers l'avant sous commande précise à grande vitesse le long d'une troisième direction, afin d'usiner une pièce supportée sur la table de travail (20) pour former une surface courbe tridimensionnelle sur l'espace de travail, la troisième direction est sensiblement perpendiculaire aux première et deuxième directions.

2. Tour (100) selon la revendication 1, dans lequel chacune des bases coulissantes (33) comprend deux premiers blocs coulissants (331) pour venir en prise de manière coulissante avec la paire de premiers rails coulissants (131).

3. Tour (100) selon la revendication 1, dans lequel l'au moins un premier forceur (351) est monté de manière fixe sur chacune des au moins deux bases coulissantes (33) faisant face à la paire des corps de support (13), l'au moins un premier stator (353) est monté de manière fixe sur chacun des deux corps de support (13), et les interactions entre l'au moins un premier forceur (351) et l'au moins un premier stator (353) entraînent le déplacement du dispositif mobile (30) sur la paire de corps de support (13).

4. Tour (100) selon la revendication 3, dans lequel chacun de la paire de corps de support (13) forme une rainure de réception (133) entre la paire de premiers rails coulissants (131), l'au moins un premier stator (353) est reçu de manière fixe dans la rainure de réception (133), et l'au moins un premier forceur (353) est reçu de manière coulissante dans la rainure de réception (133).

5. Tour (100) selon la revendication 1, dans lequel le second mécanisme d'entraînement (37) comprend au moins un second forceur (371) et au moins un second stator (373), l'au moins un second forceur (371) est monté de manière fixe sur le dispositif d'alimentation (40), l'au moins un second stator (373) est monté de manière fixe sur les traverses (31), et les interactions entre l'au moins un second forceur (371) et l'au moins un second stator (373) entraînent le couteau (49) afin de le déplacer le long des traverses (31).

6. Tour (100) selon la revendication 1, dans lequel le dispositif d'alimentation (40) comprend en outre un corps de chariot coulissant (41) assemblé de manière coulissante avec les traverses (31), les traverses (31) ont une paire de seconds rails coulissants (311) positionnés sur une surface latérale faisant face au dispositif d'alimentation (40), chacune des surfaces du corps de chariot coulissant (41) faisant face à la traverse (31) comporte deux seconds blocs coulissants (411) venant en prise de manière coulissante avec la paire de seconds rails coulissants (311), et l'au moins un second stator (373) est positionné entre les deux seconds blocs coulissants (411).

7. Tour (100) selon la revendication 1, dans lequel le dispositif d'alimentation (40) comprend en outre un siège de montage (43) et un porte-outil (45), le siège de montage (43) est positionné sur le dispositif mobile (30), le porte-outil (45) vient en prise de manière coulissante avec le siège de montage (43), le couteau (49) est installé sur le porte-outil (45), et le mécanisme d'alimentation (47) est monté et reçu dans le siège de montage (43) pour commander le porte-outil (45) se déplaçant le long de la troisième direction par rapport au siège de montage (43).

8. Tour (100) selon la revendication 7, dans lequel le porte-outil (45) comprend un corps principal (451) et une planche coulissante (453) faisant saillie du corps principal (451), le siège de montage (43) comprend un cadre (431), au moins une partie de guidage (4317) est positionnée dans le cadre (431), le corps principal (451) est positionné de manière coulissante hors du siège de montage (43), et la planche coulissante (453) passe à travers la rainure traversante (4318) et vient en prise de manière coulissante avec l'au moins une partie de guidage (4317).

9. Tour (100) selon la revendication 8, dans lequel le cadre (431) comprend une première paroi latérale (4311) et une seconde paroi latérale (4313) positionnées sensiblement parallèlement à la première paroi latérale (4311), l'au moins une partie de guidage (4317) est positionnée sur la première paroi latérale (4311) et s'étend sensiblement parallèlement à la troisième direction, une rainure traversante (4318) est définie au niveau de la seconde paroi latérale (4313) correspondant à l'au moins une partie de guidage (4317), deux des parties de guidage (4319) sont positionnées sur la seconde paroi latérale (4313) et sur deux côtés de la rainure traversante (4318), le corps principal (451) se relie de manière coulissante avec les deux parties de guidage (4319) et la planche coulissante (453) passe à travers la rainure traversante (4318).

10. Tour (100) selon la revendication 9, dans lequel le corps principal (451) comprend deux groupes de premières parties directes (4513) venant en prise avec les parties de guidage (4317), et une seconde partie directe (4531) est positionnée à une extrémité de la planche de glissement (453) hors du corps principal (451) pour se relier de manière coulissante à l'au moins une partie de guidage (4317).
